(19) Europäisches Patentamt / European Patent Office / Office européen des brevets

(11) **EP 3 667 229 B1**

(12) **EUROPEAN PATENT SPECIFICATION**

(45) Date of publication and mention
of the grant of the patent:
**01.09.2021 Bulletin 2021/35**

(21) Application number: **18888532.1**

(22) Date of filing: **05.12.2018**

(51) Int Cl.:
*G01B 7/30* (2006.01)     *G01D 5/241* (2006.01)
*G01D 5/20* (2006.01)

(86) International application number:
**PCT/CN2018/119280**

(87) International publication number:
**WO 2019/114583 (20.06.2019 Gazette 2019/25)**

(54) **ALTERNATING ELECTRIC FIELD-BASED ABSOLUTE TIME-GRATING ANGULAR DISPLACEMENT SENSOR**

WINKELVERSCHIEBUNGSSENSOR MIT ABSOLUTER ZEITRASTERUNG AUF DER BASIS EINES ALTERNIERENDEN ELEKTRISCHEN FELDES

CAPTEUR DE DÉPLACEMENT ANGULAIRE À RÉSEAU TEMPOREL ABSOLU BASÉ SUR UN CHAMP ÉLECTRIQUE ALTERNATIF

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.12.2017 CN 201711351544**

(43) Date of publication of application:
**17.06.2020 Bulletin 2020/25**

(73) Proprietor: **Chongqing University of Technology
Chongqing 400054 (CN)**

(72) Inventors:
- **LIU, Xiaokang**
  **Chongqing 400054 (CN)**
- **YU, Zhicheng**
  **Chongqing 400054 (CN)**
- **PENG, Kai**
  **Chongqing 400054 (CN)**
- **ZHENG, Fangyan**
  **Chongqing 400054 (CN)**
- **PU, Hongji**
  **Chongqing 400054 (CN)**

(74) Representative: **Viering, Jentschura & Partner mbB
Patent- und Rechtsanwälte
Am Brauhaus 8
01099 Dresden (DE)**

(56) References cited:
CN-A- 101 245 982     CN-A- 103 968 750
CN-A- 106 643 470     DE-A1- 19 931 809
JP-A- H1 169 751     US-A- 4 851 835
US-A1- 2004 046 548     US-A1- 2017 003 146
US-A1- 2017 350 731

- WOLFFENBUTTEL R F ET AL: "AN INTEGRABLE CAPACITIVE ANGULAR DISPLACEMENT SENSOR WITH IMPROVED LINEARITY", SENSORS AND ACTUATORS A: PHYSICAL, ELSEVIER BV, NL, vol. A27, no. 1 - 03, 1 May 1991 (1991-05-01), pages 835-843, XP000216788, ISSN: 0924-4247

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

BACKGROUND OF THE INVENTION

Technical Field

The invention relates to a precise angular displacement sensor, and in particular to an absolute time-grating angular displacement sensor based on an alternating electric field.

Description of Related Art

Grating sensors such as optical gratings, magnetic gratings, and capacitive gratings are mainly used for traditional precise displacement measurement with periodic gratings that are uniformly distributed in space as measurement references, and the angular displacement is obtained by counting the gratings. The angular displacement is obtained by counting the gratings. In order to improve the measurement accuracy and resolution, these grating sensors use precision engraving and also require a high-precision electronic subdivision technology, a complex and rigorous engraving process and an electronic subdivision circuit, causing a high cost of sensors and a poor anti-interference ability. In recent years, a time-grating sensor which uses a clock pulse as a reference for displacement measurement has been developed. Based on this, an electric-field type time-grating angular displacement sensor (Publication No. CN103968750 A) is developed. This sensor uses a high-frequency clock pulse as the measurement reference, and uses parallel capacitor plates to build an alternating electric field for precise displacement measurement. This sensor fulfills precise measurement, but still has the following problems: (1) due to the adoption of an incremental counting method, cumulative errors are caused and only angular displacement in one cycle can be identified; and (2) a sensing signal is output from a rotor electrode on a rotor substrate; and since the rotor substrate needs routing of a signal output line, this sensor cannot be used in some cases and has a narrow application range. US2017350731 describes another electrostatic encoder having transmitting and receiving electrodes alternately arranged on the stator in capacitive interaction with relay electrodes on the rotor.

BRIEF SUMMARY OF THE INVENTION

An objective of the invention is to provide an absolute time-grating angular displacement sensor based on an alternating electric field, so as to achieve measurement of absolute angular displacement, to while expand the application range and to enhance the industrial adaptability.

The absolute time-grating angular displacement sensor based on an alternating electric field according to the invention includes a stator substrate and a rotor substrate mounted coaxially with the stator substrate; a lower surface of the rotor substrate and an upper surface of the stator substrate are opposite to and parallel with each other and have a gap therebetween; the lower surface of the rotor substrate is provided with an induction electrode, and the upper surface of the stator substrate is provided with an excitation electrode opposite to the induction electrode; the excitation electrode is composed of a circle of sector-annular electrodes having the same radial height and the same central angle and arranged at equal intervals in the circumferential direction, wherein the $(4n_1 + 1)^{th}$ sector-annular electrodes are connected into a group to form an excitation phase A, the $(4n_1 + 2)^{th}$ sector-annular electrodes are connected into a group to form an excitation phase B, the $(4n_1 + 3)^{th}$ sector-annular electrodes are connected into a group to form an excitation phase C, and the $(4n_1 + 4)^{th}$ sector-annular electrodes are connected into a group to form an excitation phase D, where $n_1$ is sequentially valued from all integers from 0 to $M_1$-1, and $M_1$ represents the number of periods of the excitation electrode.

The upper surface of the stator substrate is provided with a differential reception electrode I and a differential reception electrode II, the reception electrode I is located outside the excitation electrode, the reception electrode II is located inside the excitation electrode, and the lower surface of the rotor substrate is provided with a reflection electrode I opposite to the reception electrode I and a reflection electrode II opposite to the reception electrode II (that is, the reflection electrode I is located outside the induction electrode, and the reflection electrode II is located inside the induction electrode); the induction electrode is composed of a circle of identical double-cosine-shaped electrodes arranged at equal intervals in the circumferential direction, and the radial height of the double-cosine-shaped electrodes is smaller than that of the sector-annular electrodes, wherein the $(4n_2 + 1)^{th}$ double-cosine-shaped electrodes are connected into a group to form an induction group A, the $(4n_2 + 2)^{th}$ double-cosine-shaped electrodes are connected into a group to form an induction group B, the $(4n_2 + 3)^{th}$ double-cosine-shaped electrodes are connected into a group to form an induction group C, and the $(4n_2 + 4)^{th}$ double-cosine-shaped electrodes are connected into a group to form an induction group D, where $n_2$ is sequentially valued from all integers from 0 to $M_2$-1, and $M_2$ represents the number of periods of the induction electrode; the reflection electrode I has a reflection group $A_1$, a reflection group $B_1$, a reflection group $C_1$, and a reflection

group $D_1$ which are respectively connected to the corresponding induction groups A, B, C, and D; the reflection electrode II has a reflection group $A_2$, a reflection group $B_2$, a reflection group $C_2$ and a reflection group $D_2$ which are respectively connected to the corresponding induction groups A, B, C, and D.

During the measurement, the rotor substrate and the stator substrate rotate relatively in parallel, and the four channels of co-frequency constant-amplitude sinusoidal excitation voltages with a phase difference of 90° are applied to the excitation phases A, B, C, and D of the stator substrate respectively; excitation signals pass through a primary coupling electric field between the excitation electrode and the induction electrode to generate four channels of co-frequency constant-amplitude electrical signals with a phase difference of 90° on the induction electrode; these four channels of electrical signals pass through secondary coupling electric fields between the reflection electrode I and the reception electrode I as well as between the reflection electrode II and the reception electrode II to generate first and second co-frequency constant-amplitude traveling wave signals with a phase difference of 180° on the reception electrode I and to generate third and fourth co-frequency constant-amplitude traveling wave signals with a phase difference of 180° on the reception electrode II; a precisely-measured first-channel sinusoidal traveling wave signal is generated by combining the first traveling wave signal with the second traveling wave signal through a subtraction circuit, and a second-channel sinusoidal traveling wave signal is generated by combining the third traveling wave signal with the fourth traveling wave signal through a subtraction circuit; the precisely-measured first-channel sinusoidal traveling wave signal or the precisely-measured second-channel sinusoidal traveling wave signal is processed to obtain a precisely-measured angular displacement value (i.e., the period inner angular displacement value); the phase difference obtained after the phase comparison between the precisely-measured first-channel sinusoidal traveling wave signal and the precisely-measured second-channel sinusoidal traveling wave signal is processed to obtain a roughly-measured electrode position count value, and an absolute angular displacement value is obtained by combining the precisely-measured angular displacement value with the roughly-measured electrode position count value.

The shape of the double-cosine-shaped electrodes in the induction electrode after being unfolded in the circumferential direction is a fully-enclosed axisymmetric pattern formed by two constant-amplitude cosine curves with a phase difference of 180° within an interval of $[-\pi,\pi]$ .

The central angle spaced between two adjacent sector-annular electrodes in the excitation electrode is equal to the central angle of one sector-annular electrode.

The reflection electrode I is composed of a circle of sector-annular electrodes I having the same radial height and the same central angle and arranged at equal intervals in the circumferential direction, wherein the $(4n_3 + 1)^{th}$ sector-annular electrodes I are connected into a group to form the reflection group $A_1$, the $(4n_3 + 2)^{th}$ sector-annular electrodes I are connected into a group to form the reflection group $B_1$, the $(4n_3 + 3)^{th}$ sector-annular electrodes I are connected into a group to form the reflection group $C_1$, and the $(4n_3 + 4)^{th}$ sector-annular electrodes I are connected into a group to form the reflection group $D_1$, where $n_3$ is sequentially valued from all integers from 0 to $M_3$-1, and $M_3$ represents the number of periods of the reflection electrode I; and the reflection group $A_1$ is connected with the reflection group A, the reflection group $B_1$ is connected with the reflection group B, the reflection group $C_1$ is connected with the reflection group C, and the reflection group $D_1$ is connected with the reflection group D.

The reflection electrode II is composed of a circle of sector-annular electrodes II having the same radial height and the same central angle and arranged at equal intervals in the circumferential direction, wherein the $(4n_4+1)^{th}$ sector-annular electrodes II are connected into a group to form the reflection group $A_2$, the $(4n_4+2)^{th}$ sector-annular electrodes II are connected into a group to form the reflection group B2, the $(4n_4+3)^{th}$ sector-annular electrodes II are connected into a group to form the reflection group $C_2$, and the $(4n_4+4)^{th}$ sector-annular electrodes II are connected into a group to form the reflection group $D_2$, where $n_4$ is sequentially valued from all integers from 0 to $M_4$-1, and $M_4$ represents the number of periods of the reflection electrode II; and the reflection group $A_2$ is connected with the reflection group A, the reflection group $B_2$ is connected with the reflection group B, the reflection group $C_2$ is connected with the reflection group C, and the reflection group $D_2$ is connected with the reflection group D.

The reception electrode I is composed of a circle of same fan blade-shaped electrodes I arranged at equal arc-length intervals in the circumferential direction; the radial height of the fan blade-shaped electrodes I is smaller than that of the sector-annular electrodes I; the shape of the fan blade-shaped electrodes I is a fully-enclosed pattern formed by two identical cosine polar coordinate curve segments I intersecting with concentric inner and outer arcs at start and end points within an interval of $[-\pi,0]$, and a central angle between the start points of the two identical cosine polar coordinate curve segments I is $\alpha$; where the $(2n_5+1)^{th}$ fan blade-shaped electrodes I are connected into a group as an output electrode of a first traveling wave signal, and the $(2n_5+2)^{th}$ fan blade-shaped electrodes I are connected into a group as an output electrode of a second traveling wave signal, where $n_5$ is sequentially valued from all integers from 0 to $M_5$-1, $M_5$ represents the number of periods of the reception electrode I, and $M_5 = M_3$.

The reception electrode II is composed of a circle of same fan blade-shaped electrodes II arranged at equal arc-length intervals in the circumferential direction; the radial height of the fan blade-shaped electrodes II is smaller than that of the sector-annular electrodes II; the shape of the fan blade-shaped electrodes II is a fully-enclosed pattern formed by two identical cosine polar coordinate curve segments II intersecting with concentric inner and outer arcs at start and end points within an interval of [- $\pi$,0], and a central angle between the start points of the two identical cosine polar coordinate curve segments II is $\beta$; where the $(2n_6 + 1)^{th}$ fan blade-shaped electrodes II are connected into a group as an output electrode of a third traveling wave signal, and the $(2n_6 + 2)^{th}$ fan blade-shaped electrodes II are connected into a group as an output electrode of a fourth traveling wave signal, where $n_6$ is sequentially valued from all integers from 0 to $M_6$-1, $M_6$ represents the number of periods of the reception electrode II, and $M_6 = M_4$.

The invention has the following effects:

(1) The four channels of traveling wave signals induced by the induction electrode are used as excitation signals of secondary coupling modulation. The excitation signals of secondary coupling modulation are reflected back to the reception electrodes I and II through the reflection electrodes I and II, so as to output traveling wave signals by the reception electrodes I and II. Therefore, the rotor substrate does not need routing of a signal output line, and the application range is wider.

(2) The precisely-measured first-channel sinusoidal traveling wave signal or the precisely-measured second-channel sinusoidal traveling wave signal is processed to obtain a precisely-measured angular displacement value, and the phase difference obtained after the phase comparison between the precisely-measured first-channel sinusoidal traveling wave signal and the precisely-measured second-channel sinusoidal traveling wave signal is processed to obtain a roughly-measured electrode position count value; both the roughly-measured position and the precisely-measured position use the precisely-measured first-channel sinusoidal traveling wave signals and the precisely-measured second-channel sinusoidal traveling wave signals, and the combination of "roughly measuring + precisely measuring" not only realizes measurement of absolute angular displacement, but also reduces the signal difference, thus ensuring measurement accuracy.

(3) The reception electrodes I and II adopt a symmetrical differential structure, which improves the measurement stability, suppresses common mode interference, enhances the signal amplitude, and achieves stronger industrial adaptability.

BRIEF DESCRIPTION OF THE SEVERAL VIEWS OF THE DRAWINGS

FIG. 1 is a schematic diagram of electrodes on a stator substrate and electrodes on a rotor substrate according to the invention.
FIG. 2 is a schematic diagram of the installation of the stator substrate and the rotor substrate according to the invention.
FIG. 3 is a schematic view of lead wires of the stator substrate according to the invention.
FIG. 4 is a schematic view of lead wires of the rotor substrate according to the invention.
FIG. 5 is a block diagram of a signal processing principle according to the invention.

DETAILED DESCRIPTION OF THE INVENTION

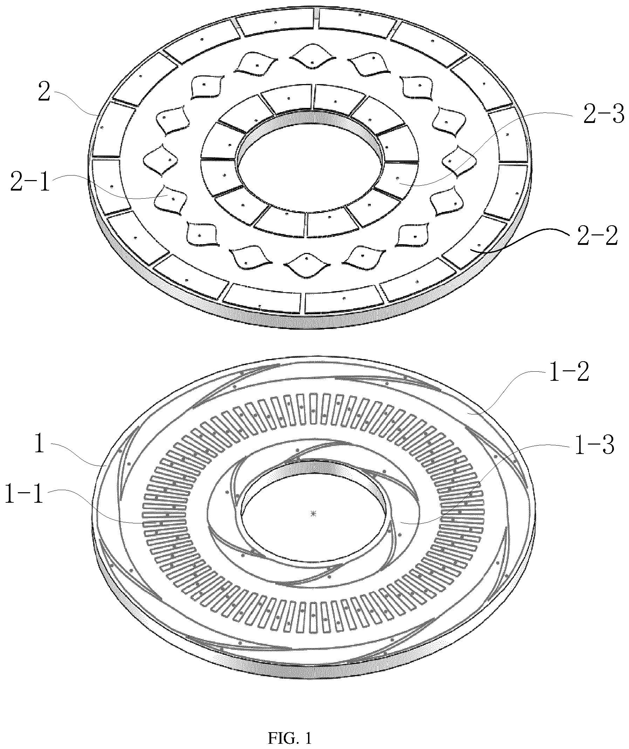

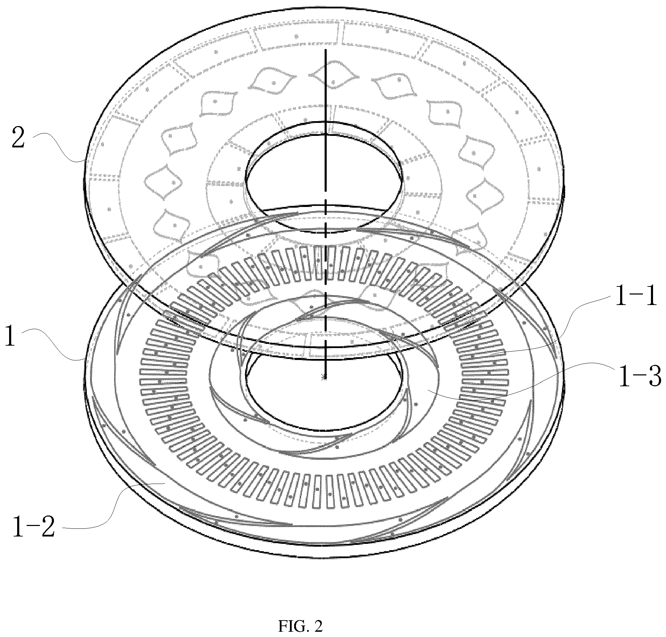

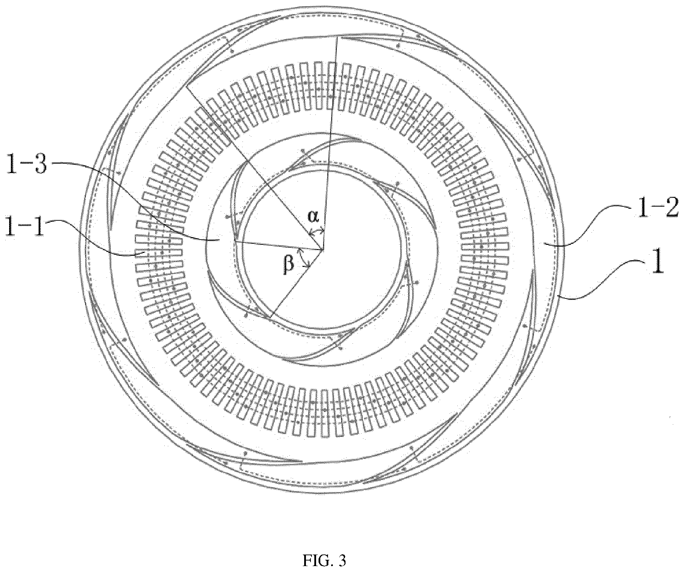

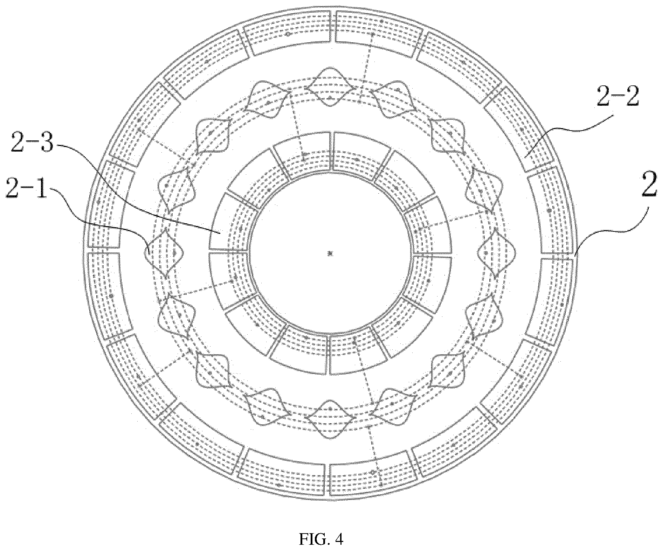

The invention will be described in detail with reference to the accompanying drawings.
As shown in FIG. 1 to FIG. 4, an absolute time-grating angular displacement sensor based on an alternating electric field includes a stator substrate 1 and a rotor substrate 2 coaxially mounted with the stator substrate 1; a lower surface of the rotor substrate 2 and an upper surface of the stator substrate 1 are opposite to and parallel with each other and have a gap of 0.5 mm therebetween; both the stator substrate 1 and the rotor substrate 2 use ceramics as a base material.
As shown in FIG. 1 to FIG. 3, the upper surface of the stator substrate is sequentially provided with a differential reception electrode I 1-2, an excitation electrode 1-1, and a differential reception electrode II 1-3 from the outer ring to the inner ring.
The excitation electrode 1-1 is composed of a circle of sector-annular electrodes having an inner circle radius of 17.72 mm, a radial height of 6.4 mm, and a central angle of 2.25° and arranged at equal intervals in the circumferential direction. The central angle corresponding to the interval (i.e., the central angle of the interval between two adjacent sector-annular electrodes) is 2.25°, the number of periods $M_1$ of the excitation electrode 1-1 = 20, and every four adjacent sector-annular electrodes form a period, so there are 80 sector-annular electrodes in total; where, in a clockwise direction along the circumference, the $(4n_1+1)^{th}$ sector-annular electrodes are connected into a group by a first excitation signal connecting line to form an excitation phase A, the $(4n_1+2)^{th}$ sector-annular electrodes are connected into a group by a second excitation signal connecting line to form an excitation phase B, the $(4n_1+3)^{th}$ sector-annular electrodes are connected into a group by a third excitation signal connecting line to form an excitation phase C, and the $(4n_1+4)^{th}$ sector-annular electrodes are connected into a group by a fourth excitation signal connecting line to form an excitation phase,

where $n_1$ is sequentially valued from all integers from 0 to 19.

The reception electrode I 1-2 is composed of a circle of identical fan blade-shaped electrodes I arranged at equal arc-length intervals in the circumferential direction; the number of periods $M_5$ of the reception electrode I 1-2 = 4; in a clockwise direction along the circumference, every two adjacent fan blade-shaped electrodes I form a period, so there are 8 fan blade-shaped electrodes I in total; the arc length between two adjacent fan blade-shaped electrodes I is 0.2 mm, and a central angle corresponding to one fan blade-shaped electrode I and one arc-length interval is 45°; the shape of the fan blade-shaped electrodes I is a fully-enclosed pattern 1 formed by two identical cosine polar coordinate curve segments I intersecting with concentric inner and outer arcs at start and end points within an interval of [- $\pi$,0]; that is, one of the two identical cosine polar coordinate curve segments I within the interval of [- $\pi$,0] intersects with the inner arc at its start point and intersects with the outer arc at its end point, and the other intersects with the inner arc at its start point and intersects with the outer arc at its end point, thus forming a fully-enclosed pattern I; the fully-enclosed pattern I (equivalent to a fan blade-shaped electrode I) has an inner circle radius of 25.78 mm and a radial height of 2.12 mm, then its outer circle radius is 27.9 mm, and the central angle $\alpha$ between the start points of the two identical cosine polar coordinate curve segments (the central angle corresponding to the inner arc of the fully-enclosed pattern I) = 44.56°; wherein, in a clockwise direction along the circumference, the $(2n_5+1)_{th}$ (odd-numbered) fan blade-shaped electrodes I are connected into a group by a signal output line as an output electrode of a first traveling wave signal, and the $(2n_5+2)^{th}$ (even-numbered) fan blade-shaped electrodes I are connected into a group by a signal output line as an output electrode of a second traveling wave signal, where $n_5$ is sequentially valued from all integers from 0 to 3.

The reception electrode II 1-3 is composed of a circle of identical fan blade-shaped electrodes II arranged at equal arc-length intervals in the circumferential direction; the number of periods $M_6$ of the reception electrode II 1-3 = 3; in a clockwise direction along the circumference, every two adjacent fan blade-shaped electrodes II form a period, so there are 6 fan blade-shaped electrodes II in total; the arc length between two adjacent fan blade-shaped electrodes II is 0.2 mm, and a central angle corresponding to one fan blade-shaped electrode II and one arc-length interval is 60°; the shape of the fan blade-shaped electrodes II is a fully-enclosed pattern II formed by two identical cosine polar coordinate curve segments I intersecting with concentric inner and outer arcs at start and end points within an interval of [- $\pi$,0]; that is, one of the two identical cosine polar coordinate curve segments II within the interval of [-$\pi$,0] intersects with the inner arc at its start point and intersects with the outer arc at its end point, and the other intersects with the inner arc at its start point and intersects with the outer arc at its end point, thus forming a fully-enclosed pattern II; the fully-enclosed pattern II (equivalent to a fan blade-shaped electrode II) has an inner circle radius of 13 mm and a radial height of 3.08 mm, then its outer circle radius is 16.08 mm, and the central angle $\beta$ between the start points of the two identical cosine polar coordinate curve segments (the central angle corresponding to the inner arc of the fully-enclosed pattern II) = 59.12°; wherein, in a clockwise direction along the circumference, the $(2n_6+1)^{th}$ (odd-numbered) fan blade-shaped electrodes II are connected into a group by a signal output line as an output electrode of a third traveling wave signal, and the $(2n_6+2)^{th}$ (even-numbered) fan blade-shaped electrodes II are connected into a group by a signal output line as an output electrode of a fourth traveling wave signal, where $n_6$ is sequentially valued from all integers from 0 to 2.

As shown in FIGS. 1, 2, and 4, the lower surface of the rotor substrate 2 is provided with a reflection electrode I 2-2, an induction electrode 2-1 and a reflection electrode II 2-3; the reflection electrode I 2-2 is opposite to the reception electrode I 1-2, the induction electrode 2-1 is opposite to the excitation electrode 1-1, and the reflection electrode II 2-3 is opposite to the reception electrode II 1-3.

The induction electrode 2-1 is composed of a circle of identical double-cosine-shaped electrodes arranged at equal intervals in the circumferential direction, and a central angle corresponding to the interval (i.e., the central angle spaced between two adjacent double-cosine-shaped electrodes) is 4.5°, the number of periods $M_2$ of the induction electrode 2-1 = 4, and every four adjacent double-cosine-shaped electrodes form a period, so there are 16 double-cosine-shaped electrodes in total; wherein, the shape of the double-cosine-shaped electrodes after being unfolded in the circumferential direction is a fully-enclosed axisymmetric pattern formed by two constant-amplitude cosine curves with a phase difference of 180° within an interval of [-$\pi$,$\pi$], the distance from the trough of each of the 16 double-cosine-shaped electrodes to the center of the circle is 19.22 mm, the radial height of each double-cosine-shaped electrode is 3.4 mm, and the corresponding central angle is 18°; wherein, in a clockwise direction along the circumference, the $(4n_2+1)^{th}$ double-cosine-shaped electrodes are connected into a group through a first sensing signal connecting line to form an induction group A, the $(4n_2+2)^{th}$ double-cosine-shaped electrodes are connected into a group through a second sensing signal connecting line to form an induction group B, the $(4n_2+3)^{th}$ double-cosine-shaped electrodes are connected into a group through a third sensing signal connecting line to form an induction group C, the $(4n_2+4)^{th}$ double-cosine-shaped electrodes are connected into a group through a fourth sensing signal connecting line to form an induction group D, where $n_2$ is sequentially valued from all integers from 0 to 3.

The reflection electrode I 2-2 is composed of a circle of sector-annular electrodes I having an inner circle radius of 25.53 mm, a radial height of 2.62 mm, and a central angle of 22.05°, and arranged at equal intervals in the circumferential direction; the central angle corresponding to the interval (i.e., the central angle spaced between two adjacent sector-annular electrodes I) is 0.45°, the inner arc length corresponding to this interval is 0.2 mm, the number of periods $M_3$ of

the reflection electrode 12-2 = 4, and every four adjacent sector-annular electrodes I form a period, so there are 16 sector-annular electrodes I in total; wherein in a clockwise direction along the circumference, the $(4n_3 +1)^{th}$ sector-annular electrodes I are connected into a group by a first reflective signal connecting line to form a reflection group $A_1$, and the reflection group $A_1$ is connected with the reflection group A through a signal lead; the $(4n_3+2)^{th}$ sector-annular electrodes are connected into a group by a second reflective signal connecting line to form a reflection group $B_1$, and the reflection group $B_1$ is connected with the reflection group B through a signal lead; the $(4n_3+3)^{th}$ sector-annular electrodes are connected into a group by a third reflective signal connecting line to form a reflection group $C_1$, and the reflection group $C_1$ is connected with the reflection group C through a signal lead; and the $(4n_3+4)^{th}$ sector-annular electrodes are connected into a group by a fourth reflective signal connecting line to form a reflection group $D_1$, and the reflection group $D_1$ is connected with the reflection group D through a signal lead; where $n_3$ is sequentially valued from all integers from 0 to 3.

The reflection electrode II 2-3 is composed of a circle of sector-annular electrodes II having an inner circle radius of 12.75mm, a radial height of 3.58mm, and a central angle of 29.1°, and arranged at equal intervals in the circumferential direction; the central angle corresponding to the interval (i.e., the central angle spaced between two adjacent sector-annular electrodes II) is 0.9°, the inner arc length corresponding to this interval is 0.2mm, the number of periods $M_4$ of the reflection electrode II 2-3 = 3, and every four adjacent sector-annular electrodes II form a period, so there are 12 sector-annular electrodes II in total; wherein, in a clockwise direction along the circumference, the $(4n_4+1)^{th}$ sector-annular electrodes II are connected into a group by a fifth reflective signal connecting line to form a reflection group $A_2$, and the reflection group $A_2$ is connected with the reflection group A through a signal lead; the $(4n_4+2)^{th}$ sector-annular electrodes II are connected into a group by a sixth reflective signal connecting line to form a reflection group $B_2$, and the reflection group $B_2$ is connected with the reflection group B through a signal lead; the $(4n_4+3)^{th}$ sector-annular electrodes II are connected into a group by a seventh reflective signal connecting line to form a reflection group $C_2$, and the reflection group $C_2$ is connected with the reflection group C through a signal lead; and the $(4n_4+4)^{th}$ sector-annular electrodes II are connected into a group by an eighth reflective signal connecting line to form a reflection group $D_2$, and the reflection group $D_2$ is connected with the reflection group D through a signal lead; where $n_4$ is sequentially valued from all integers from 0 to 2.

During the measurement, the rotor substrate 2 and the stator substrate 1 rotate relatively in parallel, and four channels of co-frequency constant-amplitude sinusoidal excitation voltages with a phase difference of 90° are applied to the excitation phases A, B, C, and D of the stator substrate respectively (i.e., four channels of co-frequency constant-amplitude sinusoidal excitation signals with a phase difference of 90° are respectively input into the four excitation signal connection lines); the excitation signals pass through a primary coupling electric field between the excitation electrode 1-1 and the induction electrode 2-1 to generate four channels of co-frequency constant-amplitude electrical signals with a phase difference of 90° on the induction electrode 2-1; these four channels of electrical signals pass through secondary coupling electric fields between the reflection electrode I 2-2 and the reception electrode I 1-2 as well as between the reflection electrode II 2-3 and the reception electrode II 1-3 to generate a first traveling wave signal $U_{o1}^{+}$ on an output electrode of the first traveling wave signal, a second traveling wave signal $U_{o1}^{-}$ on an output electrode of the second traveling wave signal, a third traveling wave signal $U_{o2}^{+}$ on an output electrode of the third traveling wave signal, and a fourth traveling wave signal $U_{o2}^{-}$ on an output electrode of the fourth traveling wave signal.

A precisely-measured first-channel sinusoidal traveling wave signal $U_{o1}$ is obtained by combining the first traveling wave signal $U_{o1}^{+}$ with the second traveling wave signal $U_{o1}^{-}$ through a subtraction circuit:

$$U_{o1} = KeU_m \sin\left[\omega t + \left(M_1 + M_5\right)\theta\right] = KeU_m \sin(\omega t + 24\theta);$$

a precisely-measured second-channel sinusoidal traveling wave signal $U_{o2}$ is obtained by combining the third traveling wave signal $U_{o2}^{+}$ with the fourth traveling wave signal $U_{o2}^{-}$ through a subtraction circuit:

$$U_{o2} = KeU_m \sin\left[\omega t + \left(M_1 + M_6\right)\theta\right] = KeU_m \sin(\omega t + 23\theta);$$

where, for the excitation signal, the amplitude $U_m$ = 5V, the frequency $f$ = 40KHz, the angular frequency $\omega = 2\pi f = 8 \times 10^4 \pi$, $Ke$ refers to an electric field coupling coefficient, and $\theta$ refers to a precisely-measured angular displacement value.

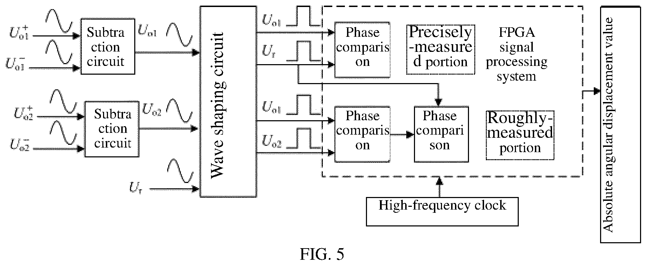

The precisely-measured first-channel sinusoidal traveling wave signal $U_{o1}$ (or the precisely-measured second-channel sinusoidal traveling wave signal $U_{o2}$) and one channel of fixed-phase co-frequency reference sinusoidal signal $U_r$ are shaped into a square wave by a wave shaping circuit and fed into an FPGA signal processing system for phase comparison; and the phase difference obtained after the phase comparison is represented by the number of interpolated high-frequency clock pulses and is transformed into a precisely-measured angular displacement value. The precisely-measured first-channel sinusoidal traveling wave signal $U_{o1}$ and the precisely-measured second-channel sinusoidal traveling wave signal $U_{o2}$ are shaped into a square wave by the wave shaping circuit and fed into the FPGA signal processing system for phase comparison; the phase difference obtained after the phase comparison and one channel of fixed-phase co-frequency reference sinusoidal signal $U_r$ shaped into a square wave are subjected to phase comparison again, and the phase difference obtained after the phase comparison is represented by the number of interpolated high-frequency clock pulses and is transformed into a roughly-measured electrode position count value, and the FPGA signal processing system combines the precisely-measured angular displacement value with the roughly-measured electrode position count value to obtain an absolute angular displacement value (see FIG. 5).

## Claims

1. An absolute time-grating angular displacement sensor based on an alternating electric field, comprising a stator substrate (1) and a rotor substrate (2) mounted coaxially with the stator substrate (1), wherein a lower surface of the rotor substrate and an upper surface of the stator substrate are opposite to and parallel with each other and have a gap therebetween; the lower surface of the rotor substrate is provided with an induction electrode (2-1), and the upper surface of the stator substrate is provided with an excitation electrode (1-1) opposite to the induction electrode (2-1); the excitation electrode (1-1) is composed of a circle of sector-annular electrodes having the same radial height and the same central angle, and arranged at equal intervals in a circumferential direction, wherein the $(4n_1+1)^{th}$ sector-annular electrodes are connected into a group to form an excitation phase A, the $(4n_1+2)^{th}$ sector-annular electrodes are connected into a group to form an excitation phase B, the $(4n_1+3)^{th}$ sector-annular electrodes are connected into a group to form an excitation phase C, and the $(4n_1+4)^{th}$ sector-annular electrodes are connected into a group to form an excitation phase D, wherein $n_1$ is sequentially valued from all integers from 0 to $M_1$-1, and $M_1$ represents the number of periods of the excitation electrode, wherein

the upper surface of the stator substrate is provided with a differential reception electrode I (1-2) and a differential reception electrode II (1-3), the reception electrode I (1-2) is located outside the excitation electrode (1-1), the reception electrode II (1-3) is located inside the excitation electrode, and the lower surface of the rotor substrate is provided with a reflection electrode I (2-2) opposite to the reception electrode I and a reflection electrode II (2-3) opposite to the reception electrode II; the induction electrode (2-1) is composed of a circle of identical double-cosine-shaped electrodes arranged at equal intervals in the circumferential direction, and the radial height of the double-cosine-shaped electrode is smaller than that of the sector-annular electrode, wherein the $(4n_2+1)^{th}$ double-cosine-shaped electrodes are connected into a group to form an induction group A, the $(4n_2+2)^{th}$ double-cosine-shaped electrodes are connected into a group to form an induction group B, the $(4n_2+3)^{th}$ double-cosine-shaped electrodes are connected into a group to form an induction group C, and the $(4n_2+4)th$ double-cosine-shaped electrodes are connected into a group to form an induction group D, wherein $n_2$ is sequentially valued from all integers from 0 to $M_2$-1, and $M_2$ represents the number of periods of the induction electrode; the reflection electrode I (2-2) has a reflection group $A_1$, a reflection group $B_1$, a reflection group $C_1$, and a reflection group $D_1$ which are respectively connected to the corresponding induction groups A, B, C, and D; the reflection electrode II (2-3) has a reflection group $A_2$, a reflection group $B_2$, a reflection group $C_2$ and a reflection group $D_2$ which are respectively connected to the corresponding induction groups A, B, C, and D;

during measurement, the rotor substrate and the stator substrate rotate relatively in parallel, and four channels of co-frequency constant-amplitude sinusoidal excitation voltages with a phase difference of 90° are applied to the excitation phases A, B, C, and D of the stator substrate respectively; first and second co-frequency constant-amplitude traveling wave signals with a phase difference of 180° are generated on the reception electrode I, and third and fourth co-frequency constant-amplitude traveling wave signals with a phase difference of 180° are generated on the reception electrode II; an precisely-measured first-channel sinusoidal traveling wave signal is generated by combining the first traveling wave signal with the second traveling wave signal through a subtraction circuit, and an precisely-measured second-channel sinusoidal traveling wave signal is generated by combining the third traveling wave signal with the fourth traveling wave signal through a subtraction circuit; the precisely-measured first-channel sinusoidal traveling wave signal or the precisely-measured second-channel sinusoidal traveling wave signal is processed to obtain an precisely-measured angular displacement value; a phase difference generated after the phase comparison between the precisely-measured first-channel sinusoidal traveling wave signal and the precisely-measured second-channel sinusoidal traveling wave signal is processed to obtain a roughly-measured electrode position count value; and the precisely-measured angular displacement value is combined with the roughly-measured electrode position count value to obtain an absolute angular displacement value.

2. The absolute time-grating angular displacement sensor based on an alternating electric field according to claim 1, wherein
the shape of the double-cosine-shaped electrodes in the induction electrode (2-1) after being unfolded in the circumferential direction is a fully-enclosed axisymmetric pattern formed by two constant-amplitude cosine curves with a phase difference of 180° within an interval of $[-\pi, \pi]$.

3. The absolute time-grating angular displacement sensor based on an alternating electric field according to claim 1, wherein the central angle spaced between two adjacent sector-annular electrodes in the excitation electrode (1-1) is equal to the central angle of one sector-annular electrode.

4. The absolute time-grating angular displacement sensor based on an alternating electric field according to any one of claims 1-3, wherein
the reflection electrode I (2-2) is composed of a circle of sector-annular electrodes I having the same radial height and the same central angle, and arranged at equal intervals in the circumferential direction, wherein the $(4n_3+1)^{th}$ sector-annular electrodes I are connected into a group to form a reflection group $A_1$, the $(4n_3+2)^{th}$ sector-annular electrodes I are connected into a group to form a reflection group $B_1$, the $(4n_3+3)^{th}$ sector-annular electrodes I are connected into a group to form a reflection group $C_1$, and the $(4n_3+4)^{th}$ sector-annular electrodes I are connected into a group to form a reflection group $D_1$, wherein $n_3$ is sequentially valued from all integers from 0 to $M_3$-1, and $M_3$ represents the number of periods of the reflection electrode I;
the reflection electrode II (2-3) is composed of a circle of sector-annular electrodes II having the same radial height and the same central angle, and arranged at equal intervals in the circumferential direction, wherein the $(4n_4+1)^{th}$ sector-annular electrodes II are connected into a group to form a reflection group $A_2$, the $(4n_4+2)$th sector-annular electrodes II are connected into a group to form a reflection group $B_2$, the $(4n_4+3)^{th}$ sector-annular electrodes II are connected into a group to form a reflection group $C2$, and the $(4n_4+4)^{th}$ sector-annular electrodes II are connected into a group to form a reflection group $D_2$, wherein $n_4$ is sequentially valued from all integers from 0 to $M_4$-1, and $M_4$ represents the number of periods of the reflection electrode II.

5. The absolute time-grating angular displacement sensor based on an alternating electric field according to claim 4, wherein
the reception electrode I (1-2) is composed of a circle of same fan blade-shaped electrodes I arranged at equal arc-length intervals in the circumferential direction; the radial height of the fan blade-shaped electrode I is smaller than that of the sector-annular electrode I; the shape of the fan blade-shaped electrode I is a fully-enclosed pattern formed by two identical cosine polar coordinate curve segments I intersecting with concentric inner and outer arcs at start and end points within an interval of $[-\pi, 0]$, and a central angle included between the start points of the two identical cosine polar coordinate curve segments I is $\alpha$; wherein the $(2n_5+1)^{th}$ fan blade-shaped electrodes I are connected into a group as an output electrode of a first traveling wave signal, and the $(2n_5+2)^{th}$ fan blade-shaped electrodes I are connected into a group as an output electrode of a second traveling wave signal, wherein $n_5$ is sequentially valued from all integers from 0 to $M_5$-1, $M_5$ represents the number of periods of the reception electrode I, and $M_5 = M_3$;
the reception electrode II (1-3) is composed of a circle of same fan blade-shaped electrodes II arranged at equal arc-length intervals in the circumferential direction; the radial height of the fan blade-shaped electrodes II is smaller than that of the sector-annular electrodes II; the shape of the fan blade-shaped electrodes II is a fully-enclosed pattern formed by two identical cosine polar coordinate curve segments II intersecting with concentric inner and outer arcs at start and end points within an interval of $[-\pi, 0]$, and a central angle between the start points of the two identical cosine polar coordinate curve segments II is $\beta$; wherein the $(2n_6+1)^{th}$ fan blade-shaped electrodes II are connected into a group as an output electrode of a third traveling wave signal, and the $(2n_6+2)^{th}$ fan blade-shaped electrodes II are connected into a group as an output electrode of a fourth traveling wave signal, wherein $n_6$ is sequentially valued from all integers from 0 to $M_6$-1, $M_6$ represents the number of periods of the reception electrode II, and $M_6 = M_4$.

**Patentansprüche**

1. Ein Absolut-Zeitraster-Winkelverschiebungs-Sensor basierend auf einem elektrischen Wechselfeld, aufweisend ein Statorsubstrat (1) und ein koaxial mit dem Statorsubstrat (1) montiertes Rotorsubstrat (2), wobei eine untere Fläche des Rotorsubstrats und eine obere Fläche des Statorsubstrats einander gegenüberliegen und parallel zueinander sind und einen Abstand dazwischen haben; die untere Fläche des Rotorsubstrats ist mit einer Induktionselektrode (2-1) bereitgestellt, die obere Fläche des Statorsubstrats ist mit einer Erregungselektrode (1-1) gegenüber der Induktionselektrode (2-1) bereitgestellt; die Erregungselektrode (1-1) besteht aus einem Kreis von kreissektorförmigen Elektroden, die die gleiche radiale Höhe und den gleichen Zentriwinkel haben und in gleichgroßen Intervallen in eine Umfangsrichtung angeordnet sind, wobei die $(4n_1+1)^{ten}$ kreissektorförmigen Elektroden zu einer Gruppe verbunden sind zum Bilden einer Erregungsphase A, die $(4n_1+2)^{ten}$ kreissektorförmigen Elektroden zu einer Gruppe verbunden sind zum Bilden einer Erregungsphase B, die $(4n_1+3)^{ten}$ kreissektorförmigen Elektroden zu einer Gruppe verbunden sind zum Bilden einer Erregungsphase C, und die $(4n_1+4)^{ten}$ kreissektorförmigen Elektroden zu einer Gruppe verbunden sind zum Bilden einer Erregungsphase D, wobei $n_1$ sequentiell ermittelt wird aus allen Ganzzahlen von 0 bis $M_1$-1, und $M_1$ repräsentiert die Anzahl an Perioden der Erregungselektrode, wobei

die obere Fläche des Statorsubstrats mit einer differentielle Empfangselektrode I (1-2) und einer differentiellen Empfangselektrode II (1-3) bereitgestellt ist, die Empfangselektrode I (1-2) außerhalb der Erregungselektrode (1-1) angeordnet ist, die Empfangselektrode II (1-3) innerhalb der Erregungselektrode angeordnet ist, und die untere Fläche des Rotorsubstrats mit einer Reflektionselektrode I (2-2) gegenüber der Empfangselektrode I und einer Reflektionselektrode II (2-3) gegenüber der Empfangselektrode II bereitgestellt ist; die Induktionselektrode (2-1) aus einem Kreis von identischen doppelkosinusförmigen Elektroden besteht, die in die Umfangsrichtung in gleichgroßen Intervallen angeordnet sind und die radiale Höhe der doppelkosinusförmigen Elektrode kleiner ist als die der kreissektorförmigen Elektrode, wobei die $(4n_2+1)^{ten}$ doppelkosinusförmigen Elektroden zu einer Gruppe verbunden sind zum Bilden einer Induktionsgruppe A, die $(4n_2+2)^{ten}$ doppelkosinusförmigen Elektroden zu einer Gruppe verbunden sind zum Bilden einer Induktionsgruppe B, die $(4n_2+3)^{ten}$ doppelkosinusförmigen Elektroden zu einer Gruppe verbunden sind zum Bilden einer Induktionsgruppe C, und die $(4n_2+4)^{ten}$ doppelkosinusförmigen Elektroden zu einer Gruppe verbunden sind zum Bilden einer Induktionsgruppe D, wobei $n_2$ sequentiell ermittelt wird aus allen Ganzzahlen von 0 bis $M_2$-1, und $M_2$ repräsentiert die Anzahl an Perioden der Induktionselektrode; wobei die Reflektionselektrode I (2-2) eine Reflektionsgruppe $A_1$, eine Reflektionsgruppe $B_1$, eine Reflektionsgruppe $C_1$, und eine Reflektionsgruppe $D_1$ hat, welche jeweils zu der entsprechenden Induktionsgruppe A, B, C, und D verbunden sind; die Reflektionselektrode II (2-3) eine Reflektionsgruppe $A_2$, eine Reflektionsgruppe $B_2$, eine Reflektionsgruppe $C_2$ und eine Reflektionsgruppe $D_2$ hat, welche jeweils zu einer entsprechenden Induktionsgruppe A, B, C, und D verbunden sind;

während einer Messung, das Rotorsubstrat und das Statorsubstrat relativ, parallel rotieren und vier Kanäle von kofrequenten, amplitudenkonstanten, sinusförmigen Erregerspannungen mit einer Phasendifferenz von 90° an die jeweiligen Erregungsphasen A, B, C, und D des Statorsubstrats angelegt werden; ein erstes und zweites kofrequentes, amplitudenkonstantes Laufende-Welle-Signal mit einer Phasendifferenz von 180° auf der Empfangselektrode I erzeugt werden, und ein drittes und viertes kofrequentes, amplitudenkonstantes Laufende-Welle-Signal mit einer Phasendifferenz von 180° auf der Empfangselektrode II erzeugt werden; ein präzise-gemessenes, sinusförmiges Laufende-Welle-Signal des ersten Kanals erzeugt wird, indem das erste Laufende-Welle-Signal mit dem zweiten Laufende-Welle-Signal mittels eines Subtraktionsschaltung kombiniert wird, ein präzise-gemessenes, sinusförmiges Laufende-Welle-Signal des zweiten Kanals erzeugt wird, indem das dritte Laufende-Welle-Signal mit dem vierten Laufende-Welle-Signal mittels einer Subtraktionsschaltung kombiniert wird; das präzise-gemessene, sinusförmige Laufende-Welle-Signal des ersten Kanals oder das präzise-gemessene, sinusförmige Laufende-Welle-Signal des zweiten Kanals verarbeitet wird zum Erlangen eines präzise-gemessenen Winkelverschiebungswertes; eine nach dem Phasenvergleich zwischen dem präzise-gemessenen, sinusförmigen Laufende-Welle-Signal des ersten Kanals und dem präzise-gemessenen, sinusförmigen Laufende-Welle-Signal des zweiten Kanals erzeugte Phasendifferenz verarbeitet wird zum Erlangen eines grob-gemessenen Elektrodenpositions-Zählwertes; und der präzise-gemessene Winkelverschiebungswert mit dem grob-gemessenen Elektrodenpositions-Zählwert kombiniert wird zum Erlangen eines absoluten Winkelverschiebungswertes.

2. Der Absolut-Zeitraster-Winkelverschiebungs-Sensor basierend auf einem elektrischen Wechselfeld gemäß Anspruch 1, wobei
die Form der doppelkosinusförmigen Elektroden in der Induktionselektrode (2-1) nach einem Entfalten in Umfangsrichtung ein vollständig geschlossenes, asymmetrisches Muster ist, das durch zwei amplitudenkonstante Kosinuskurven mit einer Phasendifferenz von 180° innerhalb eines Intervalls von $[-\pi, \pi]$ gebildet ist.

3. Der Absolut-Zeitraster-Winkelverschiebungs-Sensor basierend auf einem elektrischen Wechselfeld gemäß Anspruch 1, wobei der Zentriwinkel zwischen zwei benachbarten kreissektorförmigen Elektroden in der Erregungselektrode (1-1) gleich dem Zentriwinkel einer kreissektorförmigen Elektrode ist.

4. Der Absolut-Zeitraster-Winkelverschiebungs-Sensor basierend auf einem elektrischen Wechselfeld gemäß einem der Ansprüche 1-3, wobei

die Reflektionselektrode I (2-2) aus einem Kreis von kreissektorförmigen Elektroden I besteht, die die gleiche radiale Höhe und den gleichen Zentriwinkel haben und in die Umfangsrichtung in gleichgroßen Intervallen angeordnet sind, wobei die $(4n_3+1)^{ten}$ kreissektorförmigen Elektroden I zu einer Gruppe verbunden sind zum Bilden einer Reflektionsgruppe $A_1$, die $(4n_3+2)^{ten}$ kreissektorförmigen Elektroden I zu einer Gruppe verbunden sind zum Bilden einer Reflektionsgruppe $B_1$, die $(4n_3+3)^{ten}$ kreissektorförmigen Elektroden I zu einer Gruppe verbunden sind zum, Bilden einer Reflektionsgruppe $C_1$, und die $(4n_3+4)^{ten}$ kreissektorförmigen Elektroden I zu einer Gruppe verbunden sind zum Bilden einer Reflektionsgruppe $D_1$, wobei $n_3$ sequentiell ermittelt wird aus allen Ganzzahlen von 0 bis $M_3$-1, und $M_3$ repräsentiert die Anzahl an Perioden der Reflektionselektrode I;
die Reflektionselektrode II (2-3) aus einem Kreis von kreissektorförmigen Elektroden II besteht, die die gleiche radiale Höhe und den gleichen Zentriwinkel haben und in die Umfangsrichtung in gleichgroßen Intervallen angeordnet sind, wobei die $(4n_4+1)^{ten}$ kreissektorförmigen Elektroden II zu einer Gruppe verbunden sind zum Bilden einer Reflektionsgruppe $A_2$, die $(4n_4+2)^{ten}$ kreissektorförmigen Elektroden II zu einer Gruppe verbunden sind zum Bilden einer Reflektionsgruppe $B_2$, die $(4n_4+3)^{ten}$ kreissektorförmigen Elektroden II zu einer Gruppe verbunden sind zum Bilden einer Reflektionsgruppe $C_2$, und die $(4n_4+4)^{ten}$ kreissektorförmigen Elektroden II zu einer Gruppe verbunden sind zum Bilden einer Reflektionsgruppe $D_2$, wobei $n_4$ sequentiell ermittelt wird aus allen Ganzzahlen von 0 bis $M_4$-1, und $M_4$ repräsentiert die Anzahl an Perioden der Reflektionselektrode II.

5. Der Absolut-Zeitraster-Winkelverschiebungs-Sensor basierend auf einem elektrischen Wechselfeld gemäß Anspruch 4, wobei

die Empfangselektrode I (1-2) aus einem Kreis von gleichen fächerblattförmigen Elektroden I besteht, die in die Umfangsrichtung in gleichgroßen Bogenlängenintervallen angeordnet sind; die radiale Höhe der fächerblattförmigen Elektrode I kleiner ist als die der kreissektorförmigen Elektrode I; die Form der fächerblattförmig Elektrode I ein vollständig geschlossenes Muster ist, das durch zwei identische Kosinus-Polarkoordinaten-Kurven-Segmente I gebildet ist, die sich mit konzentrischen inneren und äußeren Kreissegmenten an Anfangs- und Endpunkten innerhalb eines Intervalls von $[-\pi,0]$ schneiden, und wobei ein Zentriwinkel zwischen den Anfangspunkten der zwei identischen Kosinus-Polarkoordinaten-Kurven-Segmente I $\alpha$ ist; wobei die $(2n_5+1)^{ten}$ fächerblattförmigen Elektroden I zu einer Gruppe verbunden sind als eine Ausgangselektrode eines ersten Laufende-Welle-Signals und die $(2n_5+2)^{ten}$ fächerblattförmigen Elektroden I zu einer Gruppe verbunden sind als eine Ausgangselektrode eines zweiten Laufende-Welle-Signals, wobei $n_5$ sequentiell ermittelt wird aus allen Ganzzahlen von 0 bis $M_5$-1, $M_5$ repräsentiert die Anzahl an Perioden der Empfangselektrode I, und $M_5 = M_3$ ;
die Empfangselektrode II (1-3) aus einem Kreis von gleichen fächerblattförmigen Elektroden II besteht, die in die Umfangsrichtung in gleichgroßen Bogenlängenintervallen angeordnet sind; die radiale Höhe der fächerblattförmigen Elektrode II kleiner ist als die der kreissektorförmigen Elektrode II; die Form der fächerblattförmigen Elektroden II ein vollständig geschlossenes Muster ist, das durch zwei identische Kosinus-Polarkoordinaten-Kurven-Segmente II gebildet ist, die sich mit konzentrischen inneren und äußeren Kreissegmenten an Anfangs- und Endpunkten innerhalb eines Intervalls von $[-\pi,0]$ schneiden, und wobei ein Zentriwinkel zwischen den Anfangspunkten der zwei identischen Kosinus-Polarkoordinaten-Kurven-Segmente II $\beta$ ist; wobei die $(2n_6+1)^{ten}$ fächerblattförmigen Elektroden II zu einer Gruppe verbunden sind als eine Ausgangselektrode eines dritten Laufende-Welle-Signals und die $(2n_6+2)^{ten}$ fächerblattförmigen Elektroden II zu einer Gruppe verbunden sind als eine Ausgangselektrode eines vierten Laufende-Welle-Signals, wobei $n_6$ sequentiell ermittelt wird aus allen Ganzzahlen von 0 bis $M_6$-1, $M_6$ repräsentiert die Anzahl an Perioden der Empfangselektrode II, und $M_6 = M_4$.

## Revendications

1. Capteur à déplacement angulaire à réseau temporel absolu basé sur un champ électrique alternatif, comprenant un substrat de stator (1) et un substrat de rotor (2) monté de manière coaxiale au substrat de stator (1), dans lequel une surface inférieure du substrat de rotor et une surface supérieure du substrat de stator sont opposées et parallèles l'une à l'autre et présentent un intervalle entre elles ; la surface inférieure du substrat de rotor est dotée d'une électrode d'induction (2-1), et la surface supérieure du substrat de stator est dotée d'une électrode d'excitation (1-1) opposée à l'électrode d'induction (2-1) ; l'électrode d'excitation (1-1) est composée d'un cercle d'électrodes annulaires-secteurs présentant la même hauteur radiale et le même angle central et agencées à intervalles égaux dans une direction circonférentielle, dans lequel les $(4n_1 + 1)^{ème}$ électrodes secteurs-annulaires sont connectées dans un groupe pour former une phase d'excitation A, les $(4n_1+2)^{ème}$ électrodes secteurs-annulaires sont connectées dans un groupe pour former une phase d'excitation B, les $(4n_1+3)^{ème}$ électrodes secteurs-annulaires sont connectées dans un groupe pour former une phase d'excitation C, et les $(4n_1+4)^{ème}$ électrodes secteurs-annulaires sont connectées dans un groupe pour former une phase d'excitation D, dans lequel $n_1$ est séquentiellement évalué pour tous les nombres entiers de 0 à $M_1$-1, et $M_1$ représente le nombre de périodes de l'électrode d'excitation, dans lequel la surface supérieure du substrat de stator est dotée d'une électrode de réception différentielle I (1-2) et d'une électrode de réception différentielle II (1-3), l'électrode de réception I (1-2) est située à l'extérieur de l'électrode d'excitation (1-1), l'électrode de réception II (1-3) est située à l'intérieur de l'électrode d'excitation, et la surface inférieure du substrat de rotor est dotée d'une électrode de réflexion I (2-2) opposée à l'électrode de réception I et d'une électrode de réflexion II (2-3) opposée à 'électrode de réception II ; l'électrode d'induction (2-1) est composée d'un cercle d'électrodes de forme cosinusoïdale double identiques agencées à intervalles réguliers dans la direction circonférentielle, et la hauteur radiale de l'électrode de forme cosinusoïdale double est inférieure à celle de l'électrode secteur-annulaire, dans lequel les $(4n_2+1)^{\text{ème}}$ électrodes de forme cosinusoïdale double sont connectées en un groupe pour former un groupe d'induction A, les $(4n_2+2)^{\text{ème}}$ électrodes de forme cosinusoïdale double sont connectées en un groupe pour former un groupe d'induction B, les $(4n_2+3)^{\text{ème}}$ électrodes de forme cosinusoïdale double sont connectées en un groupe pour former un groupe d'induction C, et les $(4n_2+4)^{\text{ème}}$ électrodes de forme cosinusoïdale double sont connectées en un groupe pour former un groupe d'induction D, dans lequel n$_2$ est séquentiellement évalué pour tous les nombres entiers de 0 à $M_2$-1, et $M_2$ représente le nombre de périodes de l'électrode d'induction ; l'électrode de réflexion I (2-2) présente un groupe de réflexion A$_1$, un groupe de réflexion B$_1$, un groupe de réflexion C$_1$, et un groupe de réflexion D$_1$ qui sont respectivement connectés aux groupes d'induction A, B, C, et D correspondants ; l'électrode de réflexion II (2-3) présente un groupe de réflexion A$_2$, un groupe de réflexion B$_2$, un groupe de réflexion C$_2$ et un groupe de réflexion D$_2$ qui sont respectivement connectés aux groupes d'induction A, B, C, et D correspondants ;

pendant la mesure, le substrat de rotor et le substrat de stator tournent relativement en parallèle, et quatre canaux de tensions d'excitation sinusoïdale à amplitude constante à co-fréquence avec une différence de phase de 90° sont appliqués aux phases d'excitation A, B, C, et D du substrat de stator respectivement ; un premier et un deuxième signal d'onde de déplacement à amplitude constante et à co-fréquence avec une différence de phase de 180° sont générés sur l'électrode de réception I, et un troisième et un quatrième signal d'onde de déplacement à amplitude constante et à co-fréquence avec une différence de phase de 180° sont générés sur l'électrode de réception II ; un signal d'onde de déplacement sinusoïdal à premier canal précisément mesuré est généré en combinant le premier signal d'onde de déplacement avec le deuxième signal d'onde de déplacement à travers un circuit de soustraction, et un signal d'onde de déplacement sinusoïdal à deuxième canal précisément mesuré est généré en combinant le troisième signal d'onde de déplacement avec le quatrième signal d'onde de déplacement à travers un circuit de soustraction ; le signal d'onde de déplacement sinusoïdal à premier canal précisément mesuré ou le signal d'onde de déplacement sinusoïdal à deuxième canal précisément mesuré est traité pour obtenir une valeur de déplacement angulaire précisément mesurée ; une différence de phase générée après la comparaison de phase entre le signal d'onde de déplacement sinusoïdal à premier canal précisément mesuré et le signal d'onde de déplacement sinusoïdal à deuxième canal précisément mesuré est traitée pour obtenir une valeur de décompte de position d'électrode grossièrement mesurée ; et la valeur de déplacement angulaire précisément mesurée est combinée avec la valeur de décompte de position d'électrode grossièrement mesurée pour obtenir une valeur de déplacement angulaire absolue.

2. Capteur de déplacement angulaire à réseau temporel absolu basé sur un champ électrique alternatif selon la revendication 1, dans lequel
la forme des électrodes de forme cosinusoïdale double dans l'électrode d'induction (2-1) après leur déploiement dans la direction circonférentielle est un motif axisymétrique totalement intégré formé par deux courbes cosinusoïdales à amplitude constante avec une différence de phase de 180° dans un intervalle de $[-\pi, \pi]$.

3. Capteur de déplacement angulaire à réseau temporel absolu basé sur un champ électrique alternatif selon la revendication 1, dans lequel l'angle central espacé entre deux électrodes secteurs-annulaires adjacents dans l'électrode d'excitation (1-1) est égal à l'angle central d'une électrode secteur-annulaire.

4. Capteur de déplacement angulaire à réseau temporel absolu basé sur un champ électrique alternatif selon l'une quelconque des revendications 1 à 3, dans lequel
l'électrode de réflexion I (2-2) est composée d'un cercle d'électrodes secteurs-annulaires I présentant la même hauteur radiale et le même angle central, et agencées à intervalles réguliers dans la direction circonférentielle, dans lequel les $(4n_3+1)^{\text{ème}}$ électrodes secteurs-annulaires I sont connectées dans un groupe pour former un groupe de réflexion Ai, les $(4n_3+2)^{\text{ème}}$ électrodes secteurs-annulaires I sont connectées dans un groupe pour former un groupe de réflexion B$_1$, les $(4n_3+3)^{\text{ème}}$ électrodes secteurs-annulaires I sont connectées dans un groupe pour former un groupe de réflexion C$_1$, et les électrodes $(4n_3+4)^{\text{ème}}$ secteurs-annulaires I sont connectées dans un groupe pour former un groupe de réflexion D$_1$, dans lequel $n_3$ est séquentiellement évalué à partir de tous les nombres entiers de 0 à $M_3$ -1, et $M_3$ représente le nombre de périodes de l'électrode de réflexion I ;

l'électrode de réflexion II (2-3) est composée d'un cercle d'électrodes secteurs-annulaires II présentant la même hauteur radiale et le même angle central, et agencées à intervalles réguliers dans la direction circonférentielle, dans lequel les $(4n_4+1)$ème électrodes secteurs-annulaires II sont connectées dans un groupe pour former un groupe de réflexion $A_2$, les $(4n_4+2)$ème électrodes secteurs-annulaires II sont connectées dans un groupe pour former un groupe de réflexion $B_2$, les $(4n_4+3)$ème électrodes secteurs-annulaires II sont connectées dans un groupe pour former un groupe de réflexion $C_2$, et les $(4n_4+4)$ème électrodes secteurs-annulaires II sont connectées dans un groupe pour former un groupe de réflexion $D_2$, dans lequel $n_4$ est séquentiellement évalué à partir de tous les nombres entiers de 0 à $M_4$ 1, et $M_4$ représente le nombre de périodes de l'électrode de réflexion II ;

5. Capteur de déplacement angulaire à réseau temporel absolu basé sur un champ électrique alternatif selon la revendication 4, dans lequel

l'électrode de réception I (1-2) est composée d'un cercle de mêmes électrodes I en forme de pale de ventilateur agencées à intervalles réguliers sur une longueur d'arc dans la direction circonférentielle ; la hauteur radiale de l'électrode I en forme de pale de ventilateur est inférieure à celle de l'électrode secteur-annulaire I; la forme de l'électrode I en forme de pale de ventilateur est un motif totalement intégré formé par deux segments de courbes de coordonnées polaires cosinusoïdaux identiques I coupant des arcs intérieur et extérieur concentriques en des points de départ et de fin dans un intervalle de [- $\pi$;0], et un angle central inclus entre les points de départ des deux segments de courbe de coordonnées polaires cosinusoïdaux identiques I est égal à a ; dans lequel les $(2n_5+1)$ème électrodes en forme de pale de ventilateur I sont connectées dans un groupe comme une électrode de sortie d'un premier signal d'onde de déplacement, et les $(2n_5+2)$ème électrodes en forme de pale de ventilateur I sont connectées dans un groupe comme une électrode de sortie d'un deuxième signal d'onde de déplacement, dans lequel $n_5$ est séquentiellement évalué à partir de tous les nombres entiers de 0 à $M_5$-1, $M_5$ représente le nombre de périodes de l'électrode de réception I, et $M_5=M_3$;

l'électrode de réception II (1-3) est composée d'un cercle de mêmes électrodes I en forme de pale de ventilateur agencées à intervalles réguliers sur une longueur d'arc dans la direction circonférentielle ; la hauteur radiale des électrodes II en forme de pale de ventilateur est inférieure à celle des électrodes secteurs-annulaires II ; la forme des électrodes II en forme de pale de ventilateur est un motif totalement intégré formé par deux segments de courbes de coordonnées polaires cosinusoïdaux identiques II coupant des arcs intérieur et extérieur concentriques en des points de départ et de fin dans un intervalle de [- $\pi$;0], et un angle central entre les points de départ des deux segments de courbe de coordonnées polaires cosinusoïdaux identiques II est égal à $\beta$ ; dans lequel les $(2n_6+1)$ème électrodes en forme de pale de ventilateur II sont connectées dans un groupe comme une électrode de sortie d'un troisième signal d'onde de déplacement, et les $(2n_6+2)$ème électrodes en forme de pale de ventilateur II sont connectées dans un groupe comme une électrode de sortie d'un quatrième signal d'onde de déplacement, dans lequel $n_6$ est séquentiellement évalué à partir de tous les nombres entiers de 0 à $M_6$-1, $M_6$ représente le nombre de périodes de l'électrode de réception I, et $M_6 = M_4$.

FIG. 1

FIG. 2

FIG. 3

FIG. 4

FIG. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 103968750 A
- US 2017350731 A